(19) Europäisches Patentamt
European Patent Office
Office européen des brevets

(11) EP 2 762 917 B1

(12) EUROPEAN PATENT SPECIFICATION

(45) Date of publication and mention
of the grant of the patent:
06.01.2016 Bulletin 2016/01

(51) Int Cl.:
*G01S 13/90* (2006.01)        *G01S 13/12* (2006.01)

(21) Application number: 14162605.1

(22) Date of filing: 31.03.2014

(54) **Sliding spotlight synthetic aperture radar, and method and device for implementing sliding spotlight SAR**

Radar mit synthetischer Apertur im gleitenden Spotlight Modus und Verfahren und Vorrichtung zur Implementierung eines gleitenden Spotlight-SAR

Radar à ouverture synthétique en mode spotlight glissant et procédé et dispositif pour la mise en oeuvre d'un SAR en mode spotlight glissant

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 22.11.2013 CN 201310597298

(43) Date of publication of application:
06.08.2014 Bulletin 2014/32

(73) Proprietor: **Institute of Electronics, Chinese Academy of Sciences**
**Beijing 100190 (CN)**

(72) Inventors:
- **Deng, Yunkai**
  **100190 Beijing (CN)**
- **Guo, Lei**
  **100190 Beijing (CN)**
- **Wang, Yu**
  **100190 Beijing (CN)**
- **Wang, Wei**
  **100190 Beijing (CN)**
- **Zhang, Zhimin**
  **100190 Beijing (CN)**
- **Zhao, Fengjun**
  **100190 Beijing (CN)**
- **Wang, Chunle**
  **100190 Beijing (CN)**

(74) Representative: **Gulde & Partner**
**Patent- und Rechtsanwaltskanzlei mbB**
**Wallstraße 58/59**
**10179 Berlin (DE)**

(56) References cited:
- **CHEN QIAN ET AL: "Investigation of Multichannel Sliding Spotlight SAR for Ultrahigh-Resolution and Wide-Swath Imaging", IEEE GEOSCIENCE AND REMOTE SENSING LETTERS, IEEE SERVICE CENTER, NEW YORK, NY, US, vol. 10, no. 6, 1 November 2013 (2013-11-01), pages 1339-1343, XP011529517, ISSN: 1545-598X, DOI: 10.1109/LGRS.2013.2240650 [retrieved on 2013-10-10]**
- **CANGUAN GAO ET AL: "Large-Scene Sliding Spotlight SAR Using Multiple Channels in Azimuth", IEEE GEOSCIENCE AND REMOTE SENSING LETTERS, IEEE SERVICE CENTER, NEW YORK, NY, US, vol. 10, no. 5, 1 September 2013 (2013-09-01), pages 1006-1010, XP011515161, ISSN: 1545-598X, DOI: 10.1109/LGRS.2012.2227929**
- **YANHUA WANG ET AL: "ANALYSIS OF SOME KEY PARAMETERS IN SLIDING SPOTLIGHT SAR", 2009 IET INTERNATIONAL RADAR CONFERENCE,, 22 April 2009 (2009-04-22), pages 1-4, XP055130566, ISSN: 0537-9989 ISBN: 978-1-84-919010-7**

**Description**

**TECHNICAL FIELD**

The disclosure relates to sliding spotlight technology in a Synthetic Aperture Radar (SAR), and more particularly to a sliding spotlight SAR, and a method and device for implementing a sliding spotlight SAR.

**BACKGROUND**

High resolution is an important index of an SAR. In a conventional stripmap operating mode of an SAR, high resolution cannot be achieved due to limit of a minimal area of an antenna. In a spotlight mode, although high resolution may be achieved by azimuthal scanning, an azimuthal imaging range is quite limited. In a sliding spotlight mode combining the stripmap mode and the spotlight mode, both high azimuth resolution and wide azimuthal swath are achieved simultaneously by scanning while sliding forward. The sliding spotlight mode is a milestone in the development and application of the SAR.

Compared with an ordinary SAR, a sliding spotlight SAR is difficult to design mainly due to difficulty in designing an antenna with a large scanning angle, as well as designing a beam position and calculating a key technical index. Proper design of these the key parameter is the key to implementing the sliding spotlight SARR. Therefore, a pressing problem is how to design various the key parameter of a sliding spotlight SAR effectively.

Qian Chen et al. (" Investigation of Multichannel Sliding Spotlight SAR for Ultrahigh-Resolution and Wide-Swath Imaging", IEEE Geoscience and Remote Sensing Letters, vol. 10, no. 6, 1 November 2013, pages 1339-1343, XP011529517, ISSN: 1545-598X, DOI: 10.1109/LGRS.2013.2240650) introduce the innovative multichannel sliding spotlight synthetic aperture radar (SAR) system for the acquisition of ultrahigh resolution radar images with wide swath coverage. The instructive system design guideline and the signal processing scheme for the proposed operational mode are exhibited. When deriving the azimuth reconstruction algorithm for the multichannel sliding spotlight mode, a novel squinted geometric model is employed, in which the variable antenna steering direction is taken into account. In addition, an in-depth quantitative analysis of system performance for the presented mode is carried on. Finally, a typical exemplary spaceborne SAR is designed based on the presented strategy, from which numerical simulation results are obtained to justify our derivations.

Canguan Gao et at. ("Large-Scene Sliding Spotlight SAR Using Multiple Channels in Azimuth", IEEE Geoscience and Remote Sensing Letters, vol. 10, no. 5, 1 September 2013, pages 1006-1010, XP011515161, ISSN: 1545-598X, DOI: 10.1109/LGRS.2012.2227929) suggest using multiple azimuth channels (MACs) for synthetic aperture radar in the sliding spotlight mode. First, we analyze the scene size constraints of conventional sliding spotlight mode, showing that a large scene size requires long scene illumination time. However, while using multiple channels inazimuth, this could be changed. Dividing a long antenna into small antennas, we can increase the azimuth resolution improvement fact, where the range size will not be reduced. Therefore, with the same illumination time, the azimuth imaging width can be enlarged for a given azimuth resolution. However, using the MAC slidingspotlight mode, the nonuniform sampling problem occurs. Unlike the processing in the MAC stripmap mode, in the MAC sliding spotlight mode, the unambigous reconstruction should be performed after the deramping in azimuth. Finally, an example is given to validate the proposed new configuration and the corresponding algorithms.

Yanhua Wang et al. ("Analysis of some key parameters in sliding spotlight SAR", 2009 IET International Radar Conference, 22 April 2009, pages 1-4, XP055130566, ISSN: 0537-9989, ISBN: 978-1-84-919010-7) analyze several key parameters in sliding spotlight SAR. First, the basic imaging geometry is described and resolution is analyzed. The differences between 'azimuth' and 'along track' resolution are discussed. Accurate formulas to evaluate these two kinds of resolution are presented. Then, the valid size of imaging area is analyzed. Finally, ambiguity is mainly studied. The differences among strip-map, spotlight and sliding spotlight are discussed. Analyses show that these parameters in sliding spotlight mode are space-variant. However, simulation results indicate that the variation may be neglected under the simulation parameters.

**SUMMARY**

In view of this, it is desired that embodiments of the disclosure provide a sliding spotlight SAR, and a method and device for implementing a sliding spotlight SAR, capable of effective design of each key parameter of the sliding spotlight SAR, allowing a high resolution and a large azimuthal swath of the sliding spotlight SAR.

Accordingly, a technical solution of an embodiment of the disclosure is implemented as follows.

A method for implementing a sliding spotlight Synthetic Aperture Radar (SAR), includes steps of:

calculating a maximal scanning angle and an antenna size of a sliding spotlight SAR based on system parameters of the sliding spotlight SAR;

determining a number of antenna sub-arrays of the sliding spotlight SAR meeting a first condition defining a distance between the antenna sub-arrays;

determining a Pulse Repetition Frequency (PRF) meeting a second condition and a third condition, wherein the second condition is for defining that no pulse transmitted by the sliding spotlight SAR falls into an echo window, and the third condition is for defining that no nadir-echo interference to the sliding spotlight SAR falls into the echo window;

acquiring information on a beam position of the sliding spotlight SAR based on the PRF meeting the second condition and the third condition;

calculating a key parameter of the sliding spotlight SAR based on the beam position of the sliding spotlight SAR, wherein the key parameter includes information on at least one of an azimuth ambiguity-to-signal ratio, a range ambiguity-to-signal ratio and a noise equivalent sigma zero; and

determining that the number of antenna sub-arrays of the sliding spotlight SAR meets the first condition and that the PRF of the sliding spotlight SAR meets the second condition and the third condition when it is determined that the key parameter of the sliding spotlight SAR meets a preset index,

wherein the step of determining (103) a PRF meeting a second condition and a third condition comprises:

determining the PRF meeting the second condition according to formula:

$$\frac{i}{2R_n / c - T_p - T_{pt}} \leq PRF \leq \frac{i+1}{2R_f / c + T_p + T_{pt}},$$

and determining the PRF meeting the third condition according to formula:

$$\frac{j}{2R_n / c - T_p - T_{pt} - 2H / c} \leq PRF \leq \frac{j+1}{2R_f / c + T_p + T_{pt} - 2H / c}$$

wherein $T_p$ is a width of the pulse transmitted, $T_{pt}$ is a protecting time, $R_n$ and $R_f$ are a near-end slant range and a far-end slant range, respectively, c is the speed of light, i and j are a positive integer, respectively, and H is the actual height of a satellite.

In an embodiment, the step of determining a number of antenna sub-arrays of the sliding spotlight SAR meeting a first condition may include the step(s) of:

determining the number of the antenna sub-arrays of the sliding spotlight SAR meeting the first condition according to formulae:

$$N = \frac{L_a}{d}$$

$$d \leq \frac{\lambda}{1 + \left|\sin(\frac{\theta}{2})\right|}$$

wherein N is the number of the antenna sub-arrays, $L_a$ is an antenna length, d is the distance between the antenna

sub-arrays, $\lambda$ is a carrier wavelength, and $\theta$ is the maximal scanning angle.

In an embodiment, the step of calculating a key parameter of the sliding spotlight SAR based on the beam position of the sliding spotlight SAR may include:

calculating the noise equivalent sigma zero of the sliding spotlight SAR according to a formula:

$$NESZ(\theta) = \frac{4 \times (4\pi)^3 \times R_0(\Theta_i)^3 \times L_{az}(\theta) \times L \times v_s \times \sin(\Theta_i) \times k \times Br \times T \times F}{P_{tx} \times G_{tx}(\Theta_i) \times G_{rx}(\Theta_i) \times \lambda^3 \times PRF \times \tau \times N \times c_0}$$

wherein $NESZ(\theta_i)$ is the noise equivalent sigma zero, $P_{tx}$ is a peak power in antenna transmission, $G_{tx}$ is a gain of a transmitting antenna; $G_{rx}$ is a gain of a receiving antenna, $\lambda$ is a carrier wavelength; $\tau$ is a width of the pulse transmitted; $\sigma$ is a backscattering coefficient, Co is the speed of light, Ro is a slant range, $L_{az}$ is an azimuth loss, L is a system loss; $B_r$ is a transmission bandwidth, T is a system temperature, F is a receiver-noise-figure, $\Theta_i$ is an incidence angle of the satellite, $v_s$ is a velocity of the satellite, and $\theta$ is the maximal scanning angle;

and calculating the azimuth ambiguity-to-signal ratio of the sliding spotlight SAR according to a formula:

$$AASR(\theta) = \frac{E\left[\left|2 \times \sum_{k=1}^{\infty} (U_k(f + k \times PRF, \theta))\right|^2\right]}{E\left[\left|U_k(f, \theta)\right|^2\right]}$$

wherein AASR($\theta_i$) is the azimuth ambiguity-to-signal ratio, $U(f)$ is an amplitude of a received signal, and the PRF is the Pulse Repetition Frequency.

In an embodiment, the method may further include the step(s) of:

calculating a Range-Cell-Migration (RCM) according to a formula:

$$RCM = \frac{R_c}{2} \times (\sin\theta + \sin\theta_{theta})^2$$

wherein $RCM$ is the Range-Cell-Migration, $R_c$ is a minimal distance between the satellite and the ground, $\theta$ is the maximal scanning angle, and $\theta_{theta}$ meets a formula:

$$\theta_{theta} = 0.886 \times \frac{\lambda}{L_a}$$

wherein $\lambda$ is a carrier wavelength, and $L_a$ is an antenna length;

and updating the echo window by adding the Range-Cell-Migration in the echo window,

wherein the second condition may define that no pulse transmitted by the sliding spotlight SAR falls into the updated echo window, and the third condition may define that no nadir-echo interference to the sliding spotlight SAR falls into the updated echo window.

A device for implementing a sliding spotlight Synthetic Aperture Radar (SAR) includes a first calculating unit, a first determining unit, a second determining unit, an acquiring unit, a second calculating unit and a third determining unit, wherein

the first calculating unit is configured to calculate a maximal scanning angle and an antenna size of a sliding spotlight SAR based on system parameters of the sliding spotlight SAR;

the first determining unit is configured to determine a number of antenna sub-arrays of the sliding spotlight SAR meeting a first condition defining a distance between the antenna sub-arrays;

the second determining unit is configured to determine a Pulse Repetition Frequency (PRF) meeting a second condition and a third condition, wherein the second condition is for defining that no pulse transmitted by the sliding spotlight SAR falls into an echo window, and the third condition is for defining that no nadir-echo interference to the sliding spotlight SAR falls into the echo window;

the acquiring unit is configured to acquire information on a beam position of the sliding spotlight SAR based on the PRF meeting the second condition and the third condition;

the second calculating unit is configured to calculate a key parameter of the sliding spotlight SAR based on the beam position of the sliding spotlight SAR, wherein the key parameter includes information on at least one of an azimuth ambiguity-to-signal ratio, a range ambiguity-to-signal ratio and a noise equivalent sigma zero; and

the third determining unit is configured to determine that the number of antenna sub-arrays of the sliding spotlight SAR meets the first condition and that the PRF of the sliding spotlight SAR meets the second condition and the third condition when it is determined that the key parameter of the sliding spotlight SAR meets a preset index,

wherein the second determining unit (23) is further configured to determine the PRF meeting the second condition according to formula:

$$\frac{i}{2R_n/c - T_p - T_{pt}} \leq PRF \leq \frac{i+1}{2R_f/c + T_p + T_{pt}},$$

and to determine the PRF meeting the third condition according to formula

$$\frac{j}{2R_n/c - T_p - T_{pt} - 2H/c} \leq PRF \leq \frac{j+1}{2R_f/c + T_p + T_{pt} - 2H/c}$$

wherein $T_p$ is a width of the pulse transmitted, $T_{pt}$ is a protecting time, $R_n$ and $R_f$ are a near-end slant range and a far-end slant range, respectively, c is the speed of light, i and j are a positive integer, respectively, and H is the actual height of a satellite.

In an embodiment, the first determining unit may be further configured to determine the number of the antenna sub-arrays of the sliding spotlight SAR meeting the first condition according to formulae:

$$N = \frac{L_a}{d}$$

$$d \leq \frac{\lambda}{1 + \left|\sin(\frac{\theta}{2})\right|}$$

wherein N is the number of the antenna sub-arrays, $L_a$ is an antenna length, d is the distance between the antenna sub-arrays, $\lambda$ is a carrier wavelength, and $\theta$ is the maximal scanning angle.

In an embodiment, the second calculating unit may be further configured to: calculate the noise equivalent sigma zero of the sliding spotlight SAR according to a formula:

$$NESZ(\theta) = \frac{4 \times (4\pi)^3 \times R_0(\Theta_i)^3 \times L_{az}(\theta) \times L \times v_s \times \sin(\Theta_i) \times k \times Br \times T \times F}{P_{tx} \times G_{tx}(\Theta_i) \times G_{rx}(\Theta_i) \times \lambda^3 \times PRF \times \tau \times N \times c_0}$$

wherein *NESZ(θᵢ)* is the noise equivalent sigma zero, $P_{tx}$ is a peak power in antenna transmission, $G_{tx}$ is a gain of a transmitting antenna; $G_{rx}$ is a gain of a receiving antenna, $\lambda$ is a carrier wavelength; $\tau$ is a width of the pulse transmitted; $\sigma$ is a backscattering coefficient, Co is the speed of light, Ro is a slant range, $L_{az}$ is an azimuth loss, L is a system loss; $B_r$ is a transmission bandwidth, T is a system temperature, F is a receiver-noise-figure, $\Theta_i$ is an incidence angle of the satellite, $v_s$ is a velocity of the satellite, and $\theta$ is the maximal scanning angle;
and calculate the azimuth ambiguity-to-signal ratio of the sliding spotlight SAR according to a formula:

$$AASR(\theta) = \frac{E\left[\left|2 \times \sum_{k=1}^{\infty}(U_k(f + k \times PRF, \theta))\right|^2\right]}{E\left[\left|U_k(f, \theta)\right|^2\right]}$$

wherein *AASR(θᵢ)* is the azimuth ambiguity-to-signal ratio, *U(f)* is an amplitude of a received signal, and the PRF is the Pulse Repetition Frequency.

In an embodiment, the device may further include a third calculating unit and an updating unit, wherein the third calculating unit may be configured to calculate a Range-Cell-Migration (RCM) according to a formula:

$$RCM = \frac{R_c}{2} \times (\sin\theta + \sin\theta_{theta})^2$$

wherein *RCM* is the Range-Cell-Migration, $R_c$ is a minimal distance between the satellite and the ground, $\theta$ is the maximal scanning angle, and $\theta_{theta}$ meets a formula:

$$\theta_{theta} = 0.886 \times \frac{\lambda}{L_a}$$

wherein $\lambda$ is a carrier wavelength, and $L_a$ is an antenna length;
and the updating unit may be configured to update the echo window by adding the Range-Cell-Migration in the echo window,
wherein the second condition may define that no pulse transmitted by the sliding spotlight SAR falls into the updated echo window, and the third condition may define that no nadir-echo interference to the sliding spotlight SAR falls into the updated echo window.

The disclosure further provides a sliding spotlight Synthetic Aperture Radar (SAR), wherein
a number of antenna sub-arrays of the sliding spotlight SAR meets a first condition defining a distance between the antenna sub-arrays;
a Pulse Repetition Frequency (PRF) of the sliding spotlight SAR meets a second condition and a third condition, wherein the second condition is for defining that no pulse transmitted by the sliding spotlight SAR falls into an echo window, and the third condition is for defining that no nadir-echo interference to the sliding spotlight SAR falls into the echo window; and
a key parameter of the multi-beam SAR meets a preset index, wherein the key parameter includes information on at least one of an azimuth ambiguity-to-signal ratio, a range ambiguity-to-signal ratio and a noise equivalent sigma zero, wherein the second condition is defined by formula:

$$\frac{i}{2R_n / c - T_p - T_{pt}} \leq PRF \leq \frac{i+1}{2R_f / c + T_p + T_{pt}},$$

and the second condition is defined by formula:

$$\frac{j}{2R_n/c - T_p - T_{pt} - 2H/c} \leq PRF \leq \frac{j+1}{2R_f/c + T_p + T_{pt} - 2H/c}$$

wherein $T_p$ is a width of the pulse transmitted, $T_{pt}$ is a protecting time, $R_n$ and $R_f$ are a near-end slant range and a far-end slant range, respectively, c is the speed of light, i and j are a positive integer, respectively, and H is the actual height of a satellite.

In an embodiment, the first condition may be defined by formulae:

$$N = \frac{L_a}{d}$$

$$d \leq \frac{\lambda}{1 + \left|\sin(\frac{\theta}{2})\right|}$$

wherein N is the number of the antenna sub-arrays, $L_a$ is an antenna length, d is the distance between the antenna sub-arrays, $\lambda$ is a carrier wavelength, and $\theta$ is the maximal scanning angle.

In embodiments of the disclosure, a maximal scanning angle and an antenna size of a sliding spotlight SAR are calculated based on system parameters of the sliding spotlight SAR; a number of antenna sub-arrays of the sliding spotlight SAR meeting a first condition defining a distance between the antenna sub-arrays is determined; a PRF meeting a second and third conditions is determined, wherein the second condition is for defining that no pulse transmitted by the sliding spotlight SAR falls into an echo window, and the third condition is for defining that no nadir-echo interference to the sliding spotlight SAR falls into the echo window; information on a beam position of the sliding spotlight SAR is acquired based on the PRF meeting the second and third conditions; a key parameter of the sliding spotlight SAR is calculated based on the beam position of the sliding spotlight SAR, wherein the key parameter includes information on at least one of an azimuth ambiguity-to-signal ratio, a range ambiguity-to-signal ratio and a noise equivalent sigma zero; and it is determined that the number of antenna sub-arrays of the sliding spotlight SAR meets the first condition and that the PRF of the sliding spotlight SAR meets the second condition and the third condition when it is determined that the key parameter of the sliding spotlight SAR meets a preset index. In this way, each key parameter of the sliding spotlight SAR can be effectively designed to meet a preset index, thereby allowing the sliding spotlight SAR to achieve a high resolution and a large azimuthal swath.

**BRIEF DESCRIPTION OF THE DRAWINGS**

Fig. 1 is a flowchart of a method for implementing a sliding spotlight SAR according to an embodiment of the disclosure;

Fig. 2 is a schematic diagram illustrating a structure of a device for implementing a sliding spotlight SAR according to an embodiment of the disclosure;

Fig. 3 is a schematic diagram illustrating basics in operation of a sliding spotlight SAR according to an embodiment of the disclosure;

Fig.4 is a diagram of a beam position according to an embodiment of the disclosure;

Fig. 5 is a noise equivalent sigma zero curve according to an embodiment of the disclosure;

Fig. 6 is an azimuth ambiguity-to-signal ratio curve according to an embodiment of the disclosure; and

Fig. 7 is a range ambiguity-to-signal ratio curve according to an embodiment of the disclosure.

**DETAILED DESCRIPTION**

To show features and technical content of the disclosure with further details, implementation of the disclosure is elaborated with reference to accompanying drawings, which are merely illustrative and should not be construed as limit to the disclosure.

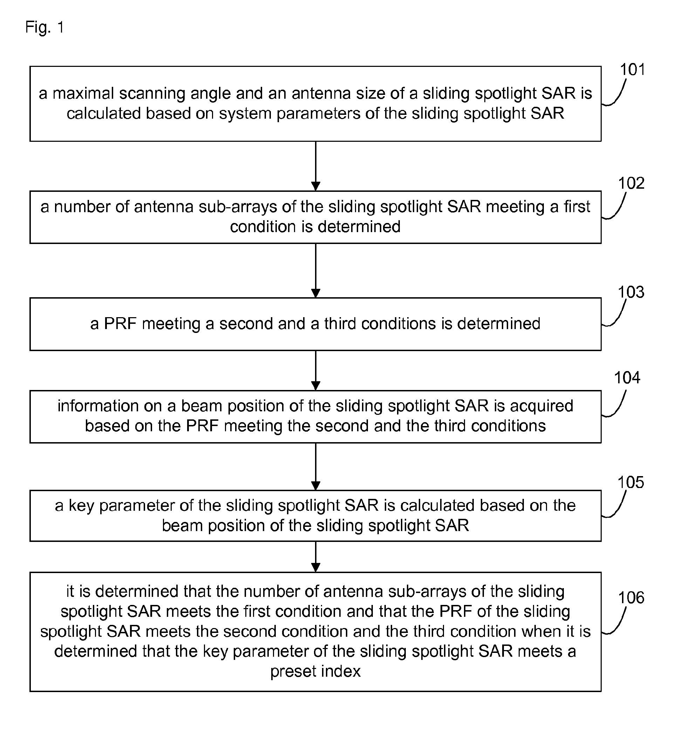

Fig. 1 is a flowchart of a method for implementing a sliding spotlight SAR according to an embodiment of the disclosure. As shown in Fig. 1, the method includes steps as follows.

Step 101: a maximal scanning angle and an antenna size of a sliding spotlight SAR is calculated based on system parameters of the sliding spotlight SAR.

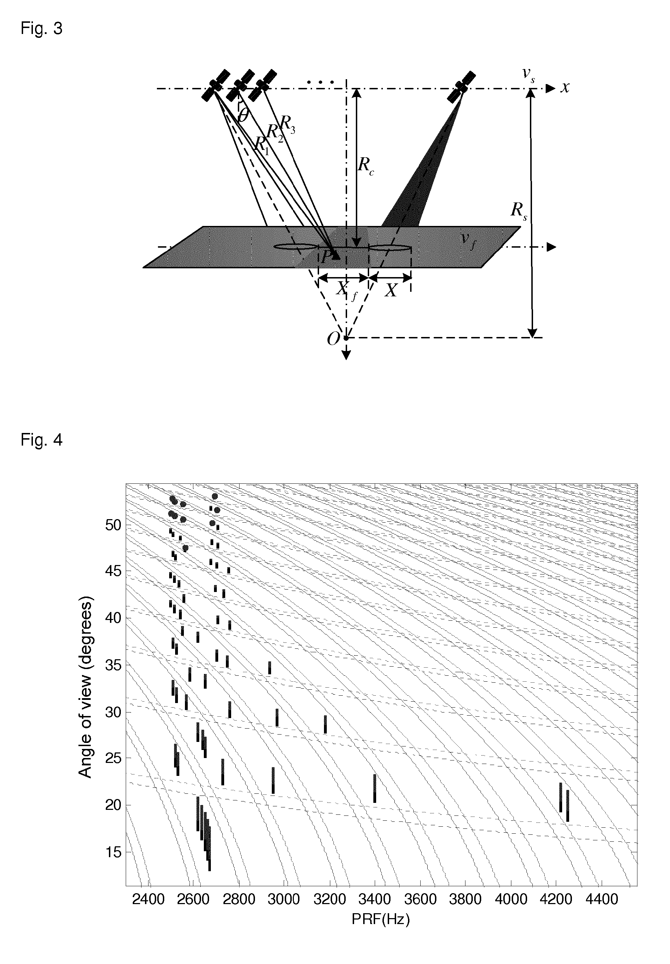

Specifically, as shown in Fig. 3, basics in operation of a spaceborne sliding spotlight SAR is as follows: a beam of an antenna always points to a virtual center $O$, with a minimal slant range $R_s$ between the satellite and the virtual center, wherein $R_c$ is the shortest distance between the satellite and the ground, X is a length of a footprint of the antenna, $X_f$ is an azimuthal imaging swath, $v_f$ is a velocity of the beam on the ground, $v_s$ is a velocity of the satellite, and $\theta$ is the maximal scanning angle. An angular velocity of the rotation of the beam can be calculated using a formula (1 a):

$$K_w = \frac{2 \times \rho_a \times \theta_{theta} \times v_s}{\lambda \times R_c} - \frac{v_f}{R_c} \tag{1a}$$

wherein $\rho_a$ is an azimuthal resolution, $\lambda$ is a carrier wavelength, $\theta_{theta} = 0.886 \times \dfrac{\lambda}{L_a}$, $\theta_{theta}$ is a width of the beam of the antenna, and $L_a$ is an antenna length.

A dwelling time of the beam can be calculated using the angular velocity of the rotation of the beam according to a formula (2a):

$$T_{burst} = \frac{R_c \times \theta_{theta} + X_f}{v_f + R_c \times K_w} \tag{2a}$$

The maximal scanning angle $\theta$ can be calculated using the angular velocity of the rotation and the dwelling time of the beam according to a formula (3a):

$$\theta = T_{burst} \times K_w \tag{3a}$$

Step 102: a number of antenna sub-arrays of the sliding spotlight SAR meeting a first condition is determined.

Here, the first condition defines a distance between the antenna sub-arrays.

A phased-array antenna can scan over angle $\theta$, given that the distance between the antenna sub-arrays meets a formula (4a):

$$d \leq \frac{\lambda}{1 + \left|\sin(\frac{\theta}{2})\right|} \tag{4a}$$

wherein d is the distance between the antenna sub-arrays.

Thus, the number of the antenna sub-arrays meeting a surface scanning requirement can be obtained via a formula (5a):

$$N = \frac{L_a}{d} \tag{5a}$$

wherein N is the number of the antenna sub-arrays.

Step 103: a Pulse Repetition Frequency (PRF) meeting a second and a third conditions is determined.

Here, the second condition defines that no pulse transmitted by the sliding spotlight SAR falls into an echo window, and the third condition defines that no nadir-echo interference to the sliding spotlight SAR falls into the echo window.

Specifically, a spaceborne sliding spotlight SAR with an antenna shared for transmission and reception is required to be kept away from being masked by a pulse transmitted and interference by a nadir echo. Thus, a specific PRF needs to be selected.

To stay away from the mask of a pulse transmitted, assuming that an echo is received after i pulse repetition intervals, the second condition defining that no pulse transmitted falls in the echo window is met when

$$\frac{i}{2R_n / c - T_p - T_{pt}} \leq PRF \leq \frac{i+1}{2R_f / c + T_p + T_{pt}} \qquad (6a)$$

wherein $T_p$ is a width of the pulse transmitted, $T_{pt}$ is a protecting time, $R_n$ and $R_f$ are a near-end slant range and a far-end slant range, respectively, and c is the speed of light.

In order to stay away from influence of a nadir echo, the echo is delayed by a delay of 2H/c. Assume that a delay of a near-end echo and a delay of a nadir echo are no less than j pulse repetition intervals, then the third condition defining that no nadir-echo interference falls in the echo window is met when

$$\frac{j}{2R_n / c - T_p - T_{pt} - 2H / c} \leq PRF \leq \frac{j+1}{2R_f / c + T_p + T_{pt} - 2H / c} \qquad (7a)$$

A diagram of a beam position of the sliding spotlight SAR can be obtained according to formulas (6) and (7). For a sliding spotlight mode, a very large Doppler bandwidth leads to a very large range cell migration, which needs to be collected and added in an echo window. The range cell migration is expressed as

$$RCM = \frac{R_c}{2} \times (\sin \theta + \sin \theta_{theta})^2 \qquad (8a)$$

wherein RCM is a Range-Cell-Migration.

Step 104: information on a beam position of the sliding spotlight SAR is acquired based on the PRF meeting the second and the third conditions.

Specifically, the diagram of the beam position of the sliding spotlight SAR can be obtained according to formulas (7a) and (8a), such that an optimal PRF is selected from the diagram of the beam position.

Step 105: a key parameter of the sliding spotlight SAR is calculated based on the beam position of the sliding spotlight SAR.

Here, the key parameter includes information on at least one of an azimuth ambiguity-to-signal ratio, a range ambiguity-to-signal ratio and a noise equivalent sigma zero.

Step 106: it is determined that the number of antenna sub-arrays of the sliding spotlight SAR meets the first condition and that the PRF of the sliding spotlight SAR meets the second condition and the third condition when it is determined that the key parameter of the sliding spotlight SAR meets a preset index.

Specifically, the key technical parameter of the sliding spotlight SAR may include the azimuth ambiguity-to-signal ratio (AASR), the range ambiguity-to-signal ratio (RASA) and the noise equivalent sigma zero (NESZ). Calculation of the RASR is the same as that conducted in a conventional SAR while calculations of the range ambiguity-to-signal ratio and the noise equivalent sigma zero are different from those conducted in the conventional SAR.

The noise equivalent sigma zero of the sliding spotlight SAR is calculated via a formula (9a):

$$NESZ(\theta_i) = \frac{4 \times (4\pi)^3 \times R_0(\Theta_i)^3 \times L_{az}(\theta_i) \times L \times v_s \times \sin(\Theta_i) \times k \times Br \times T \times F}{P_{tx} \times G_{tx}(\Theta_i) \times G_{rx,j}(\Theta_i) \times \lambda^3 \times PRFuni \times \tau \times N \times c_0} \qquad (9a)$$

wherein $P_{tx}$ is a peak power in antenna transmission, $G_{tx}$ is a gain of a transmitting antenna; $G_{rx}$ is a gain of a receiving antenna, $\lambda$ is a carrier wavelength; $\tau$ is a width of the pulse transmitted; $\sigma$ is a backscattering coefficient, Co is the speed of light, Ro is a slant range, L is a system loss; $B_r$ is a transmission bandwidth, T is a system temperature, F is a receiver-noise-figure, and $\Theta_i$ is an incidence angle of a satellite. An azimuth loss $L_{az}$, while being fixed in a stripmap mode, varies, in the sliding spotlight mode, at different scanning angles due to azimuthal scanning and needs to be calculated by real-time integration.

The AASR of the sliding spotlight SAR is calculated via a formula (10a):

$$AASR(\theta_i) = \frac{E\left[\left|2\times\sum_{k=1}^{\infty}(U_k(f+k\times PRF,\theta_i))\right|^2\right]}{E\left[\left|U_k(f,\theta_i)\right|^2\right]} \qquad (10a)$$

wherein $U(f)$ is an amplitude of a received signal, and the PRF is the Pulse Repetition Frequency.

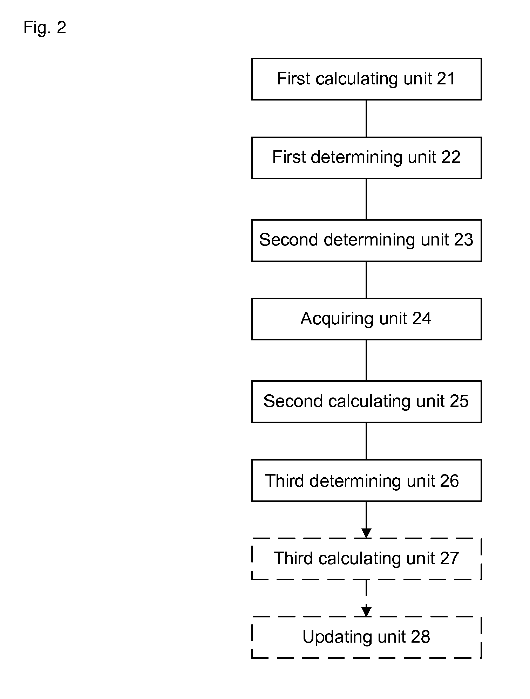

Fig. 2 is a schematic diagram illustrating a structure of a device for implementing a sliding spotlight SAR according to an embodiment of the disclosure. As shown in Fig. 2, the device includes a first calculating unit 21, a first determining unit 22, a second determining unit 23, an acquiring unit 24, a second calculating unit 25 and a third determining unit 26, wherein

the first calculating unit 21 is configured to calculate a maximal scanning angle and an antenna size of a sliding spotlight SAR based on system parameters of the sliding spotlight SAR;

the first determining unit 22 is configured to determine a number of antenna sub-arrays of the sliding spotlight SAR meeting a first condition defining a distance between the antenna sub-arrays;

the second determining unit 23 is configured to determine a Pulse Repetition Frequency (PRF) meeting a second condition and a third condition, wherein the second condition is for defining that no pulse transmitted by the sliding spotlight SAR falls into an echo window, and the third condition is for defining that no nadir-echo interference to the sliding spotlight SAR falls into the echo window;

the acquiring unit 24 is configured to acquire information on a beam position of the sliding spotlight SAR based on the PRF meeting the second condition and the third condition;

the second calculating unit 25 is configured to calculate a key parameter of the sliding spotlight SAR based on the beam position of the sliding spotlight SAR, wherein the key parameter includes information on at least one of an azimuth ambiguity-to-signal ratio, a range ambiguity-to-signal ratio and a noise equivalent sigma zero; and

the third determining unit 26 is configured to determine that the number of antenna sub-arrays of the sliding spotlight SAR meets the first condition and that the PRF of the sliding spotlight SAR meets the second condition and the third condition when it is determined that the key parameter of the sliding spotlight SAR meets a preset index.

In an embodiment, the first calculating unit 21 calculates an angular velocity of the rotation of a beam using a formula (1 b):

$$K_w = \frac{2\times\rho_a\times\theta_{theta}\times v_s}{\lambda\times R_c} - \frac{v_f}{R_c} \qquad (1b)$$

wherein $\rho_a$, is an azimuthal resolution, $\lambda$ is a carrier wavelength, $\theta_{theta} = 0.886\times\dfrac{\lambda}{L_a}$, $\theta_{theta}$ is a width of the beam of the antenna, and $L_a$ is an antenna length.

A dwelling time of the beam can be calculated using the angular velocity of the rotation of the beam according to a formula (2a):

$$T_{burst} = \frac{R_c\times\theta_{theta} + X_f}{v_f + R_c\times K_w} \qquad (2b)$$

The maximal scanning angle $\theta$ can be calculated using the angular velocity of the rotation and the dwelling time of the beam according to a formula (3b):

$$\theta = T_{burst} \times K_w \tag{3b}$$

In an embodiment, the first determining unit 22 may be further configured to determine the number of the antenna sub-arrays of the sliding spotlight SAR meeting the first condition according to formulae (5b) and (4b):

$$N = \frac{L_a}{d} \tag{5b}$$

$$d \le \frac{\lambda}{1 + \left|\sin(\frac{\theta}{2})\right|} \tag{4b}$$

wherein N is the number of the antenna sub-arrays, $L_a$ is an antenna length, d is the distance between the antenna sub-arrays, $\lambda$ is a carrier wavelength, and $\theta$ is the maximal scanning angle.

In an embodiment, the second determining unit 23 may be further configured to determine the PRF meeting the second condition and the third condition according to formulae (6b) and (7b):

$$\frac{i}{2R_n / c - T_p - T_{pt}} \le PRF \le \frac{i+1}{2R_f / c + T_p + T_{pt}} \tag{6b}$$

$$\frac{j}{2R_n / c - T_p - T_{pt} - 2H / c} \le PRF \le \frac{j+1}{2R_f / c + T_p + T_{pt} - 2H / c} \tag{7b}$$

wherein $T_p$ is a width of the pulse transmitted, $T_{pt}$ is a protecting time, $R_n$ and $R_f$ are a near-end slant range and a far-end slant range, respectively, and c is the speed of light.

In an embodiment, the second calculating unit 25 may be further configured to calculate the noise equivalent sigma zero of the sliding spotlight SAR according to a formula (9b):

$$NESZ(\theta_i) = \frac{4 \times (4\pi)^3 \times R_0(\Theta_i)^3 \times L_{az}(\theta_i) \times L \times v_s \times \sin(\Theta_i) \times k \times Br \times T \times F}{P_{tx} \times G_{tx}(\Theta_i) \times G_{rx,j}(\Theta_i) \times \lambda^3 \times PRFuni \times \tau \times N \times c_0} \tag{9b}$$

wherein $NESZ(\theta_i)$ is the noise equivalent sigma zero, $P_{tx}$ is a peak power in antenna transmission, $G_{tx}$ is a gain of a transmitting antenna; $G_{rx}$ is a gain of a receiving antenna, $\lambda$ is a carrier wavelength; $\tau$ is a width of the pulse transmitted; $\sigma$ is a backscattering coefficient, Co is the speed of light, Ro is a slant range, $L_{az}$ is an azimuth loss, L is a system loss; $B_r$ is a transmission bandwidth, T is a system temperature, F is a receiver-noise-figure, and $\Theta_i$ is an incidence angle of a satellite.

In an embodiment, the second calculating unit 25 may be further configured to calculate the azimuth ambiguity-to-signal ratio of the sliding spotlight SAR according to a formula (10b):

$$AASR(\theta_i) = \frac{E\left[\left|2 \times \sum_{k=1}^{\infty} (U_k(f + k \times PRF, \theta_i))\right|^2\right]}{E\left[\left|U_k(f, \theta_i)\right|^2\right]} \qquad (10b)$$

wherein $U(f)$ is an amplitude of a received signal, and the PRF is the Pulse Repetition Frequency.

In an embodiment, the device may further include a third calculating unit 27 and an updating unit 28, wherein the third calculating unit 27 may be configured to calculate a Range-Cell-Migration (RCM) according to a formula (8b):

$$RCM = \frac{R_c}{2} \times (\sin\theta + \sin\theta_{theta})^2 \qquad (8b)$$

wherein $RCM$ is the Range-Cell-Migration, $R_c$ is a minimal distance between a satellite and the ground, $\theta$ is the maximal scanning angle, and $\theta_{theta} = 0.886 \times \dfrac{\lambda}{L_a}$,

wherein $\lambda$ is a carrier wavelength, and $L_a$ is an antenna length; and

the updating unit 28 may be configured to update the echo window by adding the Range-Cell-Migration in the echo window.

Correspondingly, the second condition may define that no pulse transmitted by the sliding spotlight SAR falls into the updated echo window, and the third condition may define that no nadir-echo interference to the sliding spotlight SAR falls into the updated echo window.

Those skilled in the art should understand that: a function implemented by a unit in the device for implementing a sliding spotlight SAR shown in Fig. 2 can be understood by reference to related description in the aforementioned method for implementing a sliding spotlight SAR, and can be implemented by running a program on a processor or through a specific logic circuit.

An embodiment of the disclosure also provides a sliding spotlight SAR, wherein a number of antenna sub-arrays of the sliding spotlight SAR meets a first condition defining a distance between the antenna sub-arrays; a Pulse Repetition Frequency (PRF) of the sliding spotlight SAR meets a second condition and a third condition, wherein the second condition is for defining that no pulse transmitted by the sliding spotlight SAR falls into an echo window, and the third condition is for defining that no nadir-echo interference to the sliding spotlight SAR falls into the echo window; and a key parameter of the multi-beam SAR meets a preset index, wherein the key parameter includes information on at least one of an azimuth ambiguity-to-signal ratio, a range ambiguity-to-signal ratio and a noise equivalent sigma zero;

In an embodiment, the first condition may be defined by formulae (5c) and (4c):

$$N = \frac{L_a}{d} \qquad (5c)$$

$$d \leq \frac{\lambda}{1 + \left|\sin(\frac{\theta}{2})\right|} \qquad (4c)$$

wherein N is the number of the antenna sub-arrays, $L_a$ is an antenna length, d is the distance between the antenna sub-arrays, $\lambda$ is a carrier wavelength, and $\theta$ is the maximal scanning angle.

In an embodiment, the second condition and the third condition may be defined by formulae (6c) and (7c):

$$\frac{i}{2R_n / c - T_p - T_{pt}} \le PRF \le \frac{i+1}{2R_f / c + T_p + T_{pt}} \qquad (6c)$$

$$\frac{j}{2R_n / c - T_p - T_{pt} - 2H / c} \le PRF \le \frac{j+1}{2R_f / c + T_p + T_{pt} - 2H / c} \quad (7c)$$

wherein $T_p$ is a width of the pulse transmitted, $T_{pt}$ is a protecting time, $R_n$ and $R_f$ are a near-end slant range and a far-end slant range, respectively, and c is the speed of light.

The method for implementing a sliding spotlight SAR according to an embodiment of the disclosure is further elaborated with reference to Table 1. Shown in Table 1 are system requirements on a high-resolution wide-swath spaceborne SAR, wherein a resolution is required to be at least 0.15m and a swath width is required to be at least 15Km, which can be met not with an ordinary SAR system but with a sliding spotlight SAR disclosed herein.

Table 1

| Orbit height | 700Km | Transmission carrier frequency | 9.6GHz |
|---|---|---|---|
| Resolution | 0.15m | Swath width | 15Km |
| Limitation on AASR | Smaller than -20dB | Limitation on RASR | Smaller than -20dB |
| Limitation on NESZ | Smaller than -20dB | Range of angle of view | 13 degrees to 53 degrees |

An antenna length is 7.2 meters according to formulas (1a), (2a) and (3a) or formulas (1 b), (2b) and (3b), and a number of antenna sub-arrays is greater than 256 according to formulas (4a) and (5a) or formulas (4c) and (5c). Thus, the number of the antenna sub-arrays may be designed to be 320 to meet a scanning requirement.

Based on basic parameters of the sliding spotlight SAR given in Table 1, the diagram of the beam position of the sliding spotlight SAR can be obtained according to formulas (6a) and (7a) or formulas (6b) and (7b) or formulas (6c) and (7c), and each optimized beam position can be obtained, as shown in Fig. 4.

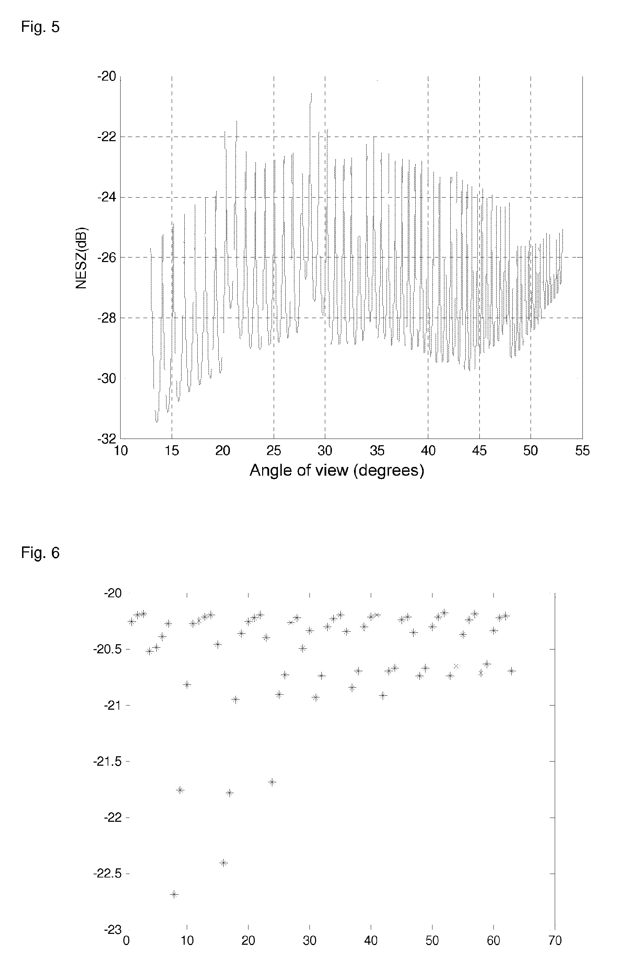

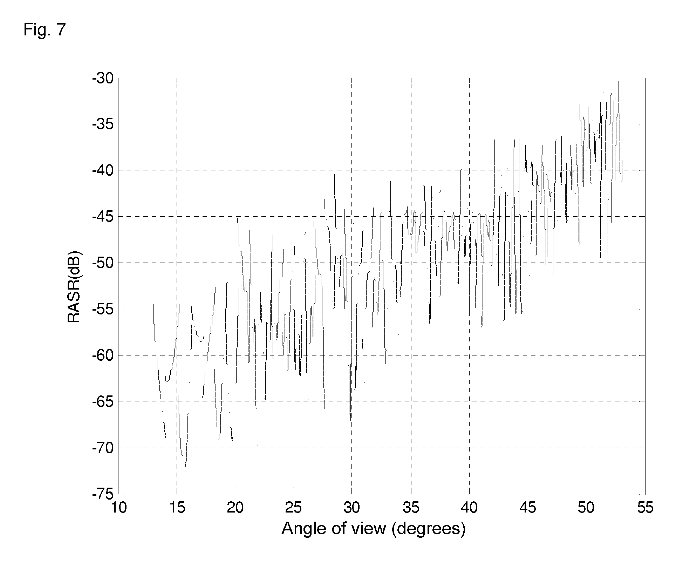

According to the beam position and formula (9a) or (9b), the noise equivalent sigma zero curve of each beam position can be obtained, as shown in Fig. 5, wherein the worst is -20.59dB, which meets the requirement of being smaller than -20dB. According to formula (10a) or (10b) for calculating an azimuth ambiguity-to-signal ratio, an azimuth ambiguity-to-signal ratio of each beam position can be obtained, as shown in Fig. 6, with the worst of -20.18dB meeting the requirement of being smaller than -20dB. A range ambiguity-to-signal ratio curve of each beam position is as shown in Fig. 7, with the worst of -30.51 dB meeting the requirement of being smaller than -20dB. All system indexes meet design requirements.

What described are merely embodiments of the disclosure and are not intended to limit the protection scope of the disclosure.

**Claims**

1.    A method for implementing a sliding spotlight Synthetic Aperture Radar, SAR, comprising:

calculating (101) a maximal scanning angle and an antenna size of a sliding spotlight SAR based on system parameters of the sliding spotlight SAR;
determining (102) a number of antenna sub-arrays of the sliding spotlight SAR meeting a first condition defining a distance between the antenna sub-arrays;
determining (103) a Pulse Repetition Frequency, PRF, meeting a second condition and a third condition, wherein the second condition is for defining that no pulse transmitted by the sliding spotlight SAR falls into an echo window, and the third condition is for defining that no nadir-echo interference to the sliding spotlight SAR falls into the echo window;
acquiring (104) information on a beam position of the sliding spotlight SAR based on the PRF meeting the second condition and the third condition;
calculating (105) a key parameter of the sliding spotlight SAR based on the beam position of the sliding spotlight SAR, wherein the key parameter comprises information on at least one of an azimuth ambiguity-to-signal ratio, a range ambiguity-to-signal ratio and a noise equivalent sigma zero; and

determining (106) that the number of antenna sub-arrays of the sliding spotlight SAR meets the first condition and that the PRF of the sliding spotlight SAR meets the second condition and the third condition when it is determined that the key parameter of the sliding spotlight SAR meets a preset index,

wherein the step of determining (103) a PRF meeting a second condition and a third condition comprises:

determining the PRF meeting the second condition according to formula:

$$\frac{i}{2R_n / c - T_p - T_{pt}} \le PRF \le \frac{i+1}{2R_f / c + T_p + T_{pt}} ,$$

and determining the PRF meeting the third condition according to formula:

$$\frac{j}{2R_n / c - T_p - T_{pt} - 2H / c} \le PRF \le \frac{j+1}{2R_f / c + T_p + T_{pt} - 2H / c}$$

wherein $T_p$ is a width of the pulse transmitted, $T_{pt}$ is a protecting time, $R_n$ and $R_f$ are a near-end slant range and a far-end slant range, respectively, c is the speed of light, i and j are a positive integer, respectively, and H is the actual height of a satellite.

2. The method according to claim 1, wherein the step of determining (102) a number of antenna sub-arrays of the sliding spotlight SAR meeting a first condition comprises:

determining the number of the antenna sub-arrays of the sliding spotlight SAR meeting the first condition according to formulae:

$$N = \frac{L_a}{d}$$

$$d \le \frac{\lambda}{1 + \left|\sin(\frac{\theta}{2})\right|}$$

wherein N is the number of the antenna sub-arrays, $L_a$ is an antenna length, d is the distance between the antenna sub-arrays, $\lambda$ is a carrier wavelength, and $\theta$ is the maximal scanning angle.

3. The method according to claim 1, wherein the step of calculating (105) a key parameter of the sliding spotlight SAR based on the beam position of the sliding spotlight SAR comprises:

calculating the noise equivalent sigma zero of the sliding spotlight SAR according to a formula:

$$NESZ(\theta) = \frac{4 \times (4\pi)^3 \times R_0(\Theta_i)^3 \times L_{az}(\theta) \times L \times v_s \times \sin(\Theta_i) \times k \times Br \times T \times F}{P_{tx} \times G_{tx}(\Theta_i) \times G_{rx}(\Theta_i) \times \lambda^3 \times PRF \times \tau \times N \times c_0}$$

wherein $NESZ(\theta_i)$ is the noise equivalent sigma zero, $P_{tx}$ is a peak power in antenna transmission, $G_{tx}$ is a gain of a transmitting antenna; $G_{rx}$ is a gain of a receiving antenna, $\lambda$ is a carrier wavelength; $\tau$ is a width of the pulse transmitted; $\sigma$ is a backscattering coefficient, Co is the speed of light, Ro is a slant range, $L_{az}$ is an azimuth loss, L is a system loss; $B_r$ is a transmission bandwidth, T is a system temperature, F is a receiver-noise-figure, $\Theta_i$ is an incidence angle of the satellite, $v_s$ is a velocity of the satellite, and $\theta$ is the maximal scanning angle; and calculating the azimuth ambiguity-to-signal ratio of the sliding spotlight SAR according to a formula:

$$AASR(\theta) = \frac{E\left[\left|2 \times \sum_{k=1}^{\infty} (U_k(f + k \times PRF, \theta))\right|^2\right]}{E\left[\left|U_k(f, \theta)\right|^2\right]}$$

wherein AASR($\theta_i$) is the azimuth ambiguity-to-signal ratio, $U(f)$ is an amplitude of a received signal, and the PRF is the Pulse Repetition Frequency.

4.  The method according to any one of claims 1-3, further comprising:

    calculating a Range-Cell-Migration, RCM, according to a formula:

$$RCM = \frac{R_c}{2} \times (\sin\theta + \sin\theta_{theta})^2$$

wherein *RCM* is the Range-Cell-Migration, $R_c$ is a minimal distance between the satellite and the ground, $\theta$ is the maximal scanning angle, and $\theta_{theta}$ meets a formula:

$$\theta_{theta} = 0.886 \times \frac{\lambda}{L_a}$$

wherein $\lambda$ is a carrier wavelength, *and $L_a$ is* an antenna length;
and updating the echo window by adding the Range-Cell-Migration in the echo window,
wherein the second condition is for defining that no pulse transmitted by the sliding spotlight SAR falls into the updated echo window, and the third condition is for defining that no nadir-echo interference to the sliding spotlight SAR falls into the updated echo window.

5.  A device for implementing a sliding spotlight Synthetic Aperture Radar, SAR, comprising a first calculating unit (21), a first determining unit (22), a second determining unit (23), an acquiring unit (24), a second calculating unit (25) and a third determining unit (26), wherein
    the first calculating unit (21) is configured to calculate a maximal scanning angle and an antenna size of a sliding spotlight SAR based on system parameters of the sliding spotlight SAR;
    the first determining unit (22) is configured to determine a number of antenna sub-arrays of the sliding spotlight SAR meeting a first condition defining a distance between the antenna sub-arrays;
    the acquiring unit (24) is configured to acquire information on a beam position of the sliding spotlight SAR based on the PRF meeting the second condition and the third condition;
    the second calculating unit (25) is configured to calculate a key parameter of the sliding spotlight SAR based on the beam position of the sliding spotlight SAR, wherein the key parameter comprises information on at least one of an azimuth ambiguity-to-signal ratio, a range ambiguity-to-signal ratio and a noise equivalent sigma zero; and
    the third determining unit (26) is configured to determine that the number of antenna sub-arrays of the sliding spotlight SAR meets the first condition and that the PRF of the sliding spotlight SAR meets the second condition and the third condition when it is determined that the key parameter of the sliding spotlight SAR meets a preset index,
    **characterized in that** the second determining unit (23) is configured to determine a Pulse Repetition Frequency, PRF, meeting a second condition and a third condition, wherein the second condition is for defining that no pulse transmitted by the sliding spotlight SAR falls into an echo window, and the third condition is for defining that no nadir-echo interference to the sliding spotlight SAR falls into the echo window; and

the second determining unit (23) is further configured to determine the PRF meeting the second condition according to formula:

$$\frac{i}{2R_n / c - T_p - T_{pt}} \leq PRF \leq \frac{i+1}{2R_f / c + T_p + T_{pt}},$$

and to determine the PRF meeting the third condition according to formula

$$\frac{j}{2R_n / c - T_p - T_{pt} - 2H / c} \leq PRF \leq \frac{j+1}{2R_f / c + T_p + T_{pt} - 2H / c}$$

wherein $T_p$ is a width of the pulse transmitted, $T_{pt}$ is a protecting time, $R_n$ and $R_f$ are a near-end slant range and a far-end slant range, respectively, c is the speed of light, i and j are a positive integer, respectively, and H is the actual height of a satellite.

6. The device according to claim 5, wherein the first determining unit (22) is further configured to determine the number of the antenna sub-arrays of the sliding spotlight SAR meeting the first condition according to formulae:

$$N = \frac{L_a}{d}$$

$$d \leq \frac{\lambda}{1 + \left| \sin(\frac{\theta}{2}) \right|}$$

wherein N is the number of the antenna sub-arrays, $L_a$ is an antenna length, d is the distance between the antenna sub-arrays, $\lambda$ is a carrier wavelength, and $\theta$ is the maximal scanning angle.

7. The device according to claim 5, wherein the second calculating unit (25) is further configured to: calculate the noise equivalent sigma zero of the sliding spotlight SAR according to a formula:

$$NESZ(\theta) = \frac{4 \times (4\pi)^3 \times R_0(\Theta_i)^3 \times L_{az}(\theta) \times L \times v_s \times \sin(\Theta_i) \times k \times Br \times T \times F}{P_{tx} \times G_{tx}(\Theta_i) \times G_{rx}(\Theta_i) \times \lambda^3 \times PRF \times \tau \times N \times c_0}$$

wherein $NESZ(\theta_i)$ is the noise equivalent sigma zero, $P_{tx}$ is a peak power in antenna transmission, $G_{tx}$ is a gain of a transmitting antenna; $G_{rx}$ is a gain of a receiving antenna, $\lambda$ is a carrier wavelength; $\tau$ is a width of the pulse transmitted; $\sigma$ is a backscattering coefficient, Co is the speed of light, Ro is a slant range, $L_{az}$ is an azimuth loss, L is a system loss; $B_r$ is a transmission bandwidth, T is a system temperature, F is a receiver-noise-figure, $\Theta_i$ is an incidence angle of the satellite, $v_s$ is a velocity of the satellite, and $\theta$ is the maximal scanning angle; and calculate the azimuth ambiguity-to-signal ratio of the sliding spotlight SAR according to a formula:

$$AASR(\theta) = \frac{E\left[\left\|2 \times \sum_{k=1}^{\infty} (U_k(f + k \times PRF, \theta))\right\|^2\right]}{E\left[\left\|U_k(f, \theta)\right\|^2\right]}$$

wherein $AASR(\theta_i)$ is the azimuth ambiguity-to-signal ratio, $U(f)$ is an amplitude of a received signal, and the PRF is the Pulse Repetition Frequency.

8. The device according to any one of claims 5-7, further comprising a third calculating unit (27) and an updating unit (28), wherein
the third calculating unit is configured to calculate a Range-Cell-Migration, RCM, according to a formula:

$$RCM = \frac{R_c}{2} \times (\sin\theta + \sin\theta_{theta})^2$$

wherein $RCM$ is the Range-Cell-Migration, $R_c$ is a minimal distance between the satellite and the ground, $\theta$ is the maximal scanning angle, and $\theta_{theta}$ meets a formula:

$$\theta_{theta} = 0.886 \times \frac{\lambda}{L_a}$$

wherein $\lambda$ is a carrier wavelength, and $L_a$ is an antenna length;
and the updating unit is configured to update the echo window by adding the Range-Cell-Migration in the echo window, wherein the second condition is for defining that no pulse transmitted by the sliding spotlight SAR falls into the updated echo window, and the third condition is for defining that no nadir-echo interference to the sliding spotlight SAR falls into the updated echo window.

9. A sliding spotlight Synthetic Aperture Radar, SAR, wherein
a number of antenna sub-arrays of the sliding spotlight SAR meets a first condition defining a distance between the antenna sub-arrays; and
a key parameter of the multi-beam SAR meets a preset index, wherein the key parameter comprises information on at least one of an azimuth ambiguity-to-signal ratio, a range ambiguity-to-signal ratio and a noise equivalent sigma zero,
**characterized in that** a Pulse Repetition Frequency, PRF, of the sliding spotlight SAR meets a second condition and a third condition, wherein the second condition is for defining that no pulse transmitted by the sliding spotlight SAR falls into an echo window, and the third condition is for defining that no nadir-echo interference to the sliding spotlight SAR falls into the echo window; and
the second condition is defined by formula:

$$\frac{i}{2R_n/c - T_p - T_{pt}} \leq PRF \leq \frac{i+1}{2R_f/c + T_p + T_{pt}},$$

and the second condition is defined by formula:

$$\frac{j}{2R_n/c - T_p - T_{pt} - 2H/c} \leq PRF \leq \frac{j+1}{2R_f/c + T_p + T_{pt} - 2H/c}$$

wherein $T_p$ is a width of the pulse transmitted, $T_{pt}$ is a protecting time, $R_n$ and $R_f$ are a near-end slant range and a far-end slant range, respectively, c is the speed of light, i and j are a positive integer, respectively, and H is the actual height of a satellite.

**10.** The sliding spotlight SAR according to claim 9, wherein the first condition is defined by formulae:

$$N = \frac{L_a}{d}$$

$$d \le \frac{\lambda}{1 + \left| \sin(\frac{\theta}{2}) \right|}$$

wherein N is the number of the antenna sub-arrays, $L_a$ is an antenna length, d is the distance between the antenna sub-arrays, $\lambda$ is a carrier wavelength, and $\theta$ is the maximal scanning angle.

**Patentansprüche**

**1.** Verfahren zur Implementierung eines Radars mit synthetischer Apertur, SAR, im gleitenden Spotlight-Modus, das umfasst:

Berechnen (101) eines maximalen Scanwinkels und einer Antennengröße eines gleitenden Spotlight-SAR auf der Basis von Systemparametern des gleitenden Spotlight-SAR;
Bestimmen (102) einer Anzahl von Antennenuntergruppen des gleitenden Spotlight-SAR, die eine erste Bedingung, die einen Abstand zwischen den Antennenuntergruppen definiert, erfüllt;
Bestimmen (103) einer Impulsfolgefrequenz, PRF (Pulse Repetition Frequency), die eine zweite und eine dritte Bedingung erfüllt, wobei die zweite Bedingung definiert, dass kein Impuls, der von dem gleitenden Spotlight-SAR gesendet wird, in ein Echofenster fällt, und wobei die dritte Bedingung definiert, dass keine Nadir-Echointerferenz bei dem gleitenden Spotlight-SAR in das Echofenster fällt;
Erfassen (104) von Informationen auf einer Strahlposition des gleitenden Spotlight-SAR auf der Basis der PRF, die die zweite Bedingung und die dritte Bedingung erfüllt;
Berechnen (105) eines Schlüsselparameters des gleitenden Spotlight-SAR auf der Basis der Strahlposition des gleitenden Spotlight-SAR, wobei der Schlüsselparameter Informationen über ein Azimutmehrdeutigkeits-Signalverhältnis und/oder ein Entfernungsmehrdeutigkeits-Signalverhältnis und/oder ein Rauschleistungsverhältnis äquivalent Sigma Null umfasst; und
Bestimmen (106), dass die Anzahl von Antennenuntergruppen des gleitenden Spotlight-SAR die erste Bedingung erfüllt, und dass die PRF des gleitenden Spotlight-SAR die zweite Bedingung und die dritte Bedingung erfüllt, wenn es bestimmt ist, dass der Schlüsselparameter des gleitenden Spotlight-SAR einen vorgegebenen Index erfüllt,
wobei der Schritt des Bestimmens (103) einer PRF eine zweite Bedingung und eine dritte Bedingung erfüllt:

Bestimmen der PRF erfüllt die zweite Bedingung gemäß der Formel:

$$\frac{i}{2R_n / c - T_p - T_{pt}} \le PRF \le \frac{i+1}{2R_f / c + T_p + T_{pt}},$$

und Bestimmen der PRF erfüllt die dritte Bedingung gemäß der Formel:

$$\frac{j}{2R_n / c - T_p - T_{pt} - 2H / c} \leq PRF \leq \frac{j+1}{2R_f / c + T_p + T_{pt} - 2H / c}$$

wobei $T_p$ eine Breite des gesendeten Impulses ist, $T_{pt}$ eine Schutzzeit ist, $R_n$ und $R_f$ eine Nahschrägentfernung bzw. eine Fernschrägentfernung ist, c die Lichtgeschwindigkeit ist, i und j jeweils eine ganze positiv Zahl sind, und H die tatsächliche Höhe eines Satelliten ist.

2. Verfahren nach Anspruch 1, wobei der Schritt des Bestimmens (102) einer Anzahl von Antennenuntergruppen des gleitenden Spotlight-SAR, die eine erste Bedingung erfüllt, umfasst:

Bestimmen der Anzahl von Antennenuntergruppen des gleitenden Spotlight-SAR, die die erste Bedingung erfüllt, gemäß der Formel:

$$N = \frac{L_a}{d}$$

$$d \leq \frac{\lambda}{1 + \left| \sin(\frac{\theta}{2}) \right|}$$

wobei N die Anzahl der Antennenuntergruppen ist, $L_a$ eine Antennenlänge ist, d der Abstand zwischen den Antennenuntergruppen ist, $\lambda$ eine Trägerwellenlänge ist, und $\theta$ der maximale Scanwinkel ist.

3. Verfahren nach Anspruch 1, wobei der Schritt des Berechnens (105) eines Schlüsselparameters des gleitenden Spotlight-SAR auf der Basis der Strahlposition des gleitenden Spotlight-SAR umfasst:

Berechnen des Rauschleistungsverhältnisses äquivalent Sigma Null des gleitenden Spotlight-SAR gemäß einer Formel:

$$NESZ(\theta) = \frac{4 \times (4\pi)^3 \times R_0(\Theta_i)^3 \times L_{az}(\theta) \times L \times v_s \times \sin(\Theta_i) \times k \times Br \times T \times F}{P_{tx} \times G_{tx}(\Theta_i) \times G_{rx}(\Theta_i) \times \lambda^3 \times PRF \times \tau \times N \times c_0}$$

wobei *NESZ (θ)* das Rauschleistungsverhältnis äquivalent Sigma Null ist, $P_{tx}$ eine Scheitelleistung bei der Sendeleistung der Antenne ist, $G_{tx}$ eine Verstärkung einer Sendeantenne ist; $G_{rx}$ eine Verstärkung einer Empfangsantenne ist, $\lambda$ eine Trägerwellenlänge ist; $\tau$ eine Breite des gesendeten Impulses ist; $\sigma$ ein Rückstreukoeffizient ist, $C_0$ die Lichtgeschwindigkeit ist, $R_0$ eine Schrägentfernung ist, $L_{az}$ ein Azimutverlust ist, L ein Systemverlust ist; $B_r$ eine Übertragungsbandbreite ist, T eine Systemtemperatur ist, F eine Empfänger-Rauschleistungszahl ist, $\Theta_i$ ein Einfallswinkel des Satelliten ist, $v_s$ eine Geschwindigkeit des Satelliten und $\theta$ der maximale Scanwinkel ist;

und Berechnen des Azimutmehrdeutigkeits-Signalverhältnisses des gleitenden Spotlight-SAR gemäß einer Formel:

$$AASR(\theta) = \frac{E\left[\left|2 \times \sum_{k=1}^{\infty} (U_k(f + k \times PRF, \theta))\right|^2\right]}{E\left[\left|U_k(f, \theta)\right|^2\right]}$$

wobei *AASR (θ)* das Azimutmehrdeutigkeits-Signalverhältnis ist, U(f) eine Amplitude eines empfangenen Signals ist, und die PRF die Impulsfolgefrequenz ist.

4. Verfahren nach einem der Ansprüche 1 bis 3, das ferner umfasst:

Berechnen einer Entfernungszellenmigration, RCM, gemäß einer Formel:

$$RCM = \frac{R_c}{2} \times (\sin\theta + \sin\theta_{theta})^2$$

wobei *RCM* die Entfernungszellenmigration ist, $R_c$ ein minimaler Abstand zwischen dem Satelliten und dem Erdboden ist, θ der maximale Scanwinkel ist und $θ_{theta}$ eine Formel erfüllt:

$$\theta_{theta} = 0,886 \times \frac{\lambda}{L_a}$$

wobei λ eine Trägerwellenlänge ist, und $L_a$ eine Antennenlänge ist;
und Aktualisieren des Echofensters durch Hinzufügen der Entfernungszellenmigration in das Echofenster, wobei die zweite Bedingung darin besteht zu definieren, dass kein Impuls, der von dem gleitenden Spotlight-SAR gesendet wird, in das aktualisierte Echofenster fällt, und wobei die dritte Bedingung definiert, dass keine Nadir-Echointerferenz bei dem gleitenden Spotlight-SAR in das aktualisierte Echofenster fällt.

5. Vorrichtung zur Implementierung eines Radars mit synthetischer Apertur, SAR, im gleitenden Spotlight-Modus, die eine erste Berechnungseinheit (21), eine erste Bestimmungseinheit (22), eine zweite Bestimmungseinheit (23), eine Erfassungseinheit (24), eine zweite Berechnungseinheit (25) und eine dritte Bestimmungseinheit (26) umfasst, wobei die erste Berechnungseinheit (21) konfiguriert ist, einen maximalen Scanwinkel und eine Antennengröße eines gleitenden Spotlight-SAR auf der Basis von Systemparametern des gleitenden Spotlight-SAR zu berechnen; die erste Bestimmungseinheit (22) konfiguriert ist, eine Anzahl von Antennenuntergruppen des gleitenden Spotlight-SAR, die eine erste Bedingung, die einen Abstand zwischen den Antennenuntergruppen definiert, erfüllt, zu bestimmen; die Erfassungseinheit (24) konfiguriert ist, Informationen auf einer Strahlposition des gleitenden Spotlight-SAR auf der Basis der PRF, die die zweite Bedingung und die dritte Bedingung erfüllt, zu erfassen; die zweite Berechnungseinheit (25) konfiguriert ist, einen Schlüsselparameter des gleitenden Spotlight-SAR auf der Basis der Strahlposition des gleitenden Spotlight-SAR zu berechnen, wobei der Schlüsselparameter Informationen über ein Azimutmehrdeutigkeits-Signalverhältnis und/oder ein Entfernungsmehrdeutigkeits-Signalverhältnis und/oder ein Rauschleistungsverhältnis äquivalent Sigma Null umfasst; und die dritte Bestimmungseinheit (26) konfiguriert ist, dass die Anzahl von Antennenuntergruppen des gleitenden Spotlight-SAR die erste Bedingung erfüllt, und dass die PRF des gleitenden Spotlight-SAR die zweite Bedingung und die dritte Bedingung erfüllt, wenn es bestimmt ist, dass der Schlüsselparameter des gleitenden Spotlight-SAR einen vorgegebenen Index erfüllt, **dadurch gekennzeichnet, dass** die zweite Bestimmungseinheit (23) konfiguriert ist, eine Impulsfolgefrequenz, PRF, die eine zweite und eine dritte Bedingung erfüllt, zu bestimmen, wobei die zweite Bedingung definiert, dass kein Impuls, der von dem gleitenden Spotlight-SAR gesendet wird, in ein Echofenster fällt, und wobei die dritte Bedingung definiert, dass keine Nadir-Echointerferenz bei dem gleitenden Spotlight-SAR in das Echofenster fällt; und wobei die zweite Bestimmungseinheit (23) ferner konfiguriert ist, die PRF zu bestimmen, die die zweite Bedingung gemäß der Formel erfüllt:

$$\frac{i}{2R_n/c - T_p - T_{pt}} \leq PRF \leq \frac{i+1}{2R_f/c + T_p + T_{pt}},$$

und die PRF zu bestimmen, die die dritte Bedingung gemäß der Formel erfüllt:

$$\frac{j}{2R_n/c - T_p - T_{pt} - 2H/c} \leq PRF \leq \frac{j+1}{2R_f/c + T_p + T_{pt} - 2H/c}$$

wobei $T_p$ eine Breite des gesendeten Impulses ist, $T_{pt}$ eine Schutzzeit ist, $R_n$ und $R_f$ eine Nahschrägentfernung bzw. eine Fernschrägentfernung ist, c die Lichtgeschwindigkeit ist, i und j jeweils eine ganze positiv Zahl sind, und H die tatsächliche Höhe eines Satelliten ist.

6. Vorrichtung nach Anspruch 5, wobei die erste Bestimmungseinheit (22) ferner konfiguriert ist, die Anzahl von Antennenuntergruppen des gleitenden Spotlight-SAR, die die erste Bedingung erfüllt, gemäß der Formel zu bestimmen:

$$N = \frac{L_a}{d}$$

$$d \leq \frac{\lambda}{1 + \left| \sin(\frac{\theta}{2}) \right|}$$

wobei $N$ die Anzahl der Antennenuntergruppen ist, $L_a$ eine Antennenlänge ist, d der Abstand zwischen den Antennenuntergruppen ist, $\lambda$ eine Trägerwellenlänge ist, und $\theta$ der maximale Scanwinkel ist.

7. Vorrichtung nach Anspruch 5, wobei die zweite Berechnungseinheit (25) ferner konfiguriert ist: um das Rauschleistungsverhältnis äquivalent Sigma Null des gleitenden Spotlight-SAR gemäß einer Formel zu berechnen:

$$NESZ(\theta) = \frac{4 \times (4\pi)^3 \times R_0(\Theta_i)^3 \times L_{az}(\theta) \times L \times v_s \times \sin(\Theta_i) \times k \times Br \times T \times F}{P_{tx} \times G_{tx}(\Theta_i) \times G_{rx}(\Theta_i) \times \lambda^3 \times PRF \times \tau \times N \times c_0}$$

wobei $NESZ(\theta)$ das Rauschleistungsverhältnis äquivalent Sigma Null ist, $P_{tx}$ eine Scheitelleistung bei der Sendeleistung der Antenne ist, $G_{tx}$ eine Verstärkung einer Sendeantenne ist; $G_{rx}$ eine Verstärkung einer Empfangsantenne ist, $\lambda$ eine Trägerwellenlänge ist; $\tau$ eine Breite des gesendeten Impulses ist; $\sigma$ ein Rückstreukoeffizient ist, $C_0$ die Lichtgeschwindigkeit ist, $R_0$ eine Schrägentfernung ist, $L_{az}$ ein Azimutverlust ist, L ein Systemverlust ist; $B_r$ eine Übertragungsbandbreite ist, T eine Systemtemperatur ist, F eine Empfänger-Rauschleistungszahl ist, $\Theta_i$ ein Ein-

fallswinkel des Satelliten ist, $v_s$ eine Geschwindigkeit des Satelliten und $\theta$ der maximale Scanwinkel ist; und um das Azimutmehrdeutigkeits-Signalverhältnis des gleitenden Spotlight-SAR gemäß einer Formel zu berechnen:

$$AASR(\theta) = \frac{E\left[\left|2 \times \sum_{k=1}^{\infty}(U_k(f + k \times PRF, \theta))\right|^2\right]}{E\left[\left|U_k(f, \theta)\right|^2\right]}$$

wobei *AASR ($\theta$)* das Azimutmehrdeutigkeits-Signalverhältnis ist, U(f) eine Amplitude eines empfangenen Signals ist, und die PRF die Impulsfolgefrequenz ist.

8. Vorrichtung nach einem der Ansprüche 5 bis 7, die ferner eine dritte Berechnungseinheit (27) und eine Aktualisierungseinheit (28) umfasst, wobei
die dritte Berechnungseinheit konfiguriert ist, eine Entfernungszellenmigration, RCM, gemäß einer Formel zu berechnen:

$$RCM = \frac{R_c}{2} \times (\sin \theta + \sin \theta_{theta})^2$$

wobei *RCM* die Entfernungszellenmigration ist, $R_c$ ein minimaler Abstand zwischen dem Satelliten und dem Erdboden ist, $\theta$ der maximale Scanwinkel ist und $\theta_{theta}$ eine Formel erfüllt:

$$\theta_{theta} = 0,886 \text{ x } \frac{\lambda}{L_a}$$

wobei $\lambda$ eine Trägerwellenlänge ist, und $L_a$ eine Antennenlänge ist;
und die Aktualisierungseinheit konfiguriert ist, das Echofenster durch Hinzufügen der Entfernungszellenmigration in das Echofenster zu aktualisieren,
wobei die zweite Bedingung darin besteht zu definieren, dass kein Impuls, der von dem gleitenden Spotlight-SAR gesendet wird, in das aktualisierte Echofenster fällt, und wobei die dritte Bedingung definiert, dass keine Nadir-Echointerferenz bei dem gleitenden Spotlight-SAR in das aktualisierte Echofenster fällt.

9. Radar mit synthetischer Apertur, SAR, im gleitenden Spotlight-Modus, wobei:

eine Anzahl von Antennenuntergruppen des gleitenden Spotlight-SAR eine erste Bedingung erfüllt, die einen Abstand zwischen den Antennenuntergruppen definiert; und
ein Schlüsselparameter des Multistrahl-SAR einen vorgegebenen Index erfüllt, wobei der Schlüsselparameter Informationen über ein Azimutmehrdeutigkeits-Signalverhältnis und/oder ein Entfernungsmehrdeutigkeits-Signalverhältnis und/oder ein Rauschleistungsverhältnis äquivalent Sigma Null umfasst,
**dadurch gekennzeichnet, dass** eine Impulsfolgefrequenz, PRF, des gleitenden Spotlight-SAR eine zweite und eine dritte Bedingung erfüllt, wobei die zweite Bedingung definiert, dass kein Impuls, der von dem gleitenden Spotlight-SAR gesendet wird, in ein Echofenster fällt, und wobei die dritte Bedingung definiert, dass keine Nadir-Echointerferenz bei dem gleitenden Spotlight-SAR in das Echofenster fällt; und
wobei die zweite Bedingung durch die folgende Formel definiert ist:

$$\frac{i}{2R_n / c - T_p - T_{pt}} \leq PRF \leq \frac{i+1}{2R_f / c + T_p + T_{pt}} \; ,$$

und wobei die dritte Bedingung durch die folgende Formel definiert ist:

$$\frac{j}{2R_n / c - T_p - T_{pt} - 2H / c} \leq PRF \leq \frac{j+1}{2R_f / c + T_p + T_{pt} - 2H / c}$$

wobei $T_p$ eine Breite des gesendeten Impulses ist, $T_{pt}$ eine Schutzzeit ist, $R_n$ und $R_f$ eine Nahschrägentfernung bzw. eine Fernschrägentfernung ist, c die Lichtgeschwindigkeit ist, i und j jeweils eine ganze positiv Zahl sind, und H die tatsächliche Höhe eines Satelliten ist.

**10.** Gleitendes Spotlight-SAR nach Anspruch 9, wobei die erste Bedingung durch die folgende Formel definiert ist:

$$N = \frac{L_a}{d}$$

$$d \leq \frac{\lambda}{1 + \left| \sin(\frac{\theta}{2}) \right|}$$

wobei N die Anzahl der Antennenuntergruppen ist, $L_a$ eine Antennenlänge ist, d der Abstand zwischen den Antennenuntergruppen ist, $\lambda$ eine Trägerwellenlänge ist, und $\theta$ der maximale Scanwinkel ist.

**Revendications**

**1.** Procédé pour implémenter un radar à ouverture synthétique en mode spotlight glissant, SAR, comprenant de :

calculer (101) un angle de balayage maximal et une taille d'antenne d'un SAR en mode spotlight glissant sur la base des paramètres de système du SAR en mode spotlight glissant ;
déterminer (102) un nombre de sous-réseaux d'antenne du SAR en mode spotlight glissant remplissant une première condition définissant une distance entre les sous-réseaux d'antenne ;
déterminer (103) une fréquence de répétition d'impulsion, PRF, remplissant une seconde condition et une troisième condition, dans lequel la seconde condition sert à définir qu'aucune impulsion transmise par le SAR en mode spotlight glissant ne soit comprise dans une fenêtre d'écho, et la troisième condition sert à définir qu'aucune interférence d'écho nadir avec le SAR en mode spotlight glissant ne soit comprise dans une fenêtre d'écho ;
acquérir (104) une information sur une position de faisceau du SAR en mode spotlight glissant sur la base de la PRF remplissant la seconde condition et la troisième condition ;
calculer (105) un paramètre clé du SAR en mode spotlight glissant sur la base de la position de faisceau du SAR en mode spotlight glissant, dans lequel le paramètre clé comprend une information sur au moins un d'un rapport signal sur ambiguïté azimut, rapport signal sur ambiguïté de distance et un bruit équivalent à sigma zéro ; et

déterminer (106) que le nombre de sous-réseaux d'antenne du SAR en mode spotlight glissant remplit la première condition et que la PRF du SAR en mode spotlight glissant remplit la seconde condition et la troisième condition quand il est déterminé que le paramètre clé du SAR en mode spotlight glissant concorde avec un indice préréglé,

dans lequel l'étape de détermination (103) d'un PRF remplissant une seconde condition et une troisième condition comprend de :

déterminer le PFR remplissant la seconde condition selon la formule :

$$\frac{i}{2R_n/c - T_p - T_{pt}} \leq PRF \leq \frac{i+1}{2R_f/c + T_p + T_{pt}} ,$$

et déterminer la PRF remplissant la troisième condition selon la formule :

$$\frac{j}{2R_n/c - T_p - T_{pt} - 2H/c} \leq PRF \leq \frac{j+1}{2R_f/c + T_p + T_{pt} - 2H/c}$$

dans laquelle $T_p$ est une largeur de l'impulsion transmise, $T_{pt}$ est un temps de protection, $R_n$ et $R_f$ sont une distance oblique d'extrémité proche et une distance oblique d'extrémité distante, respectivement, c est la vitesse de la lumière, i et j sont un entier positif, respectivement, et H est la hauteur effective d'un satellite.

2. Procédé selon la revendication 1, dans lequel l'étape de détermination (102) d'un nombre de sous-réseaux d'antenne du SAR en mode spotlight glissant remplissant une première condition comprend de :

déterminer le nombre de sous-réseaux d'antenne du SAR en mode spotlight glissant remplissant la première condition selon les formules :

$$N = \frac{L_a}{d}$$

$$d \leq \frac{\lambda}{1 + \left|\sin(\frac{\theta}{2})\right|}$$

dans lesquelles N est le nombre de sous-réseaux d'antenne, $L_a$ est une longueur d'antenne, d est la distance entre les sous-réseaux d'antennes, $\lambda$ est une longueur d'onde porteuse et $\theta$ est l'angle de balayage maximal.

3. Procédé selon la revendication 1, dans lequel l'étape de calcul (105) d'un paramètre clé du SAR en mode spotlight glissant sur la base de la position de faisceau du SAR en mode spotlight glissant comprend de :

calculer le bruit équivalent à sigma zéro du SAR en mode spotlight glissant selon une formule :

$$NESZ(\theta) = \frac{4 \times (4\pi)^3 \times R_0(\Theta_i)^3 \times L_{az}(\theta) \times L \times v_s \times \sin(\Theta_i) \times k \times Br \times T \times F}{P_{tx} \times G_{tx}(\Theta_i) \times G_{rx}(\Theta_i) \times \lambda^3 \times PRF \times \tau \times N \times c_0}$$

dans laquelle NESZ($\theta$) est le bruit équivalent à sigma zéro, $P_{tx}$ est un pic de puissance dans l'émission d'antenne, $G_{tx}$ est un gain d'une antenne émettrice ; $G_{rx}$ est un gain d'une antenne réceptrice, $\lambda$ est une longueur d'onde porteuse ; r est une largeur de l'impulsion transmission ; $\sigma$ est un coefficient de rétrodiffusion ; $C_o$ est la vitesse de la lumière, $R_o$ est une distance oblique, $L_{az}$ est une perte azimut, L est une perte de système ; $B_r$ est une bande passante de transmission, T est une température de système, F est un chiffre de bruit de récepteur, $\Theta_i$ est un angle d'incidence du satellite, $v_s$ est une vitesse du satellite et $\theta$ est l'angle de balayage maximal ; et calculer le rapport signal sur ambiguïté azimut du SAR en mode spotlight glissant selon une formule :

$$AASR(\theta) = \frac{E\left[\left|2 \times \sum_{k=1}^{\infty}(U_k(f + k \times PRF, \theta))\right|^2\right]}{E\left[|U_k(f, \theta)|^2\right]}$$

dans laquelle AASR($\theta$) est le rapport signal sur ambiguïté azimut, U(f) est une amplitude d'un signal reçu et la PRF est la fréquence de répétition d'impulsion.

4. Procédé selon une quelconque des revendications 1 à 3, comprenant en outre de :

   calculer une migration de cellule distante, RCM, selon une formule :

$$RCM = \frac{R_c}{2} \times (\sin\theta + \sin\theta_{theta})^2$$

   dans laquelle RCM est la migration de cellule distante, $R_c$ est une distance minimale entre le satellite et le sol, $\theta$ est l'angle de balayage maximal et $\theta_{theta}$ concorde avec une formule :

$$\theta_{theta} = 0{,}886 \; x \; \frac{\lambda}{L_a}$$

   dans laquelle $\lambda$ est une longueur d'onde porteuse et $L_a$ est une longueur d'antenne ;
   et mettre à jour la fenêtre d'écho en ajoutant la migration de cellule distante dans la fenêtre d'écho ;
   dans lequel la seconde condition sert à définir qu'aucune impulsion transmise par le SAR en mode spotlight glissant ne soit comprise dans une fenêtre d'écho mise à jour, et la troisième condition sert à définir qu'aucune interférence d'écho nadir avec le SAR en mode spotlight glissant ne soit comprise dans une fenêtre d'écho mise à jour.

5. Dispositif pour implémenter un radar à ouverture synthétique en mode spotlight glissant, SAR, comprenant une première unité de calcul (21), une première unité de détermination (22), une seconde unité de détermination (23), une unité d'acquisition (24), une seconde unité de calcul (25) et une troisième unité de calcul (26), dans lequel la première unité de calcul (21) est configurée pour calculer un angle de balayage maximal et une taille d'antenne d'un Sar en mode spotlight glissant sur la base des paramètres de système du SAR en mode spotlight glissant ;

la première unité de détermination (22) est configurée pour déterminer un nombre de sous-réseaux d'antenne du SAR en mode spotlight glissant remplissant une première condition définissant une distance entre les sous-réseaux d'antenne ;

l'unité d'acquisition (24) est configurée pour acquérir une information sur une position de faisceau du SAR en mode spotlight glissant sur la base de la PRF remplissant la seconde condition et la troisième condition ;

la seconde unité de calcul (25) est configurée pour calculer un paramètre clé du SAR en mode spotlight glissant sur la base de la position de faisceau du SAR en mode spotlight glissant, dans lequel le paramètre clé comprend une information sur au moins un d'un rapport signal sur ambiguïté azimut, rapport signal sur ambiguïté de distance et un bruit équivalent à sigma zéro ; et

la troisième unité de détermination (26) est configurée pour déterminer que le nombre de sous-réseaux d'antenne du SAR en mode spotlight glissant remplit la première condition et que la PRF du SAR en mode spotlight glissant remplit la seconde condition et la troisième condition quand il est déterminé que le paramètre clé du SAR en mode spotlight glissant concorde avec un indice préréglé,

**caractérisé en ce que** la seconde unité de détermination (23) est configurée pour déterminer une fréquence de répétition d'impulsion, PRF, remplissant une seconde condition et une troisième condition, dans lequel la seconde condition sert à définir qu'aucune impulsion transmise par le SAR en mode spotlight glissant ne soit comprise dans une fenêtre d'écho, et la troisième condition sert à définir qu'aucune interférence d'écho nadir avec le SAR en mode spotlight glissant ne soit comprise dans une fenêtre d'écho ;

la seconde unité de détermination (23) est en utre configurée pour déterminer la PFR remplissant la seconde condition selon la formule :

$$\frac{i}{2R_n / c - T_p - T_{pt}} \leq PRF \leq \frac{i+1}{2R_f / c + T_p + T_{pt}},$$

et déterminer la PRF remplissant la troisième condition selon la formule :

$$\frac{j}{2R_n / c - T_p - T_{pt} - 2H / c} \leq PRF \leq \frac{j+1}{2R_f / c + T_p + T_{pt} - 2H / c}$$

dans laquelle $T_p$ est une largeur de l'impulsion transmise, $T_{pt}$ est un temps de protection, $R_n$ et $R_f$ sont une distance oblique d'extrémité proche et une distance oblique d'extrémité distante, respectivement, c est la vitesse de la lumière, i et j sont un entier positif, respectivement, et H est la hauteur effective d'un satellite.

6. Procédé selon la revendication 5, dans lequel la première unité de détermination (22) est en outre configurée pour déterminer le nombre de sous-réseaux d'antenne du SAR en mode spotlight glissant remplissant la première condition selon les formules :

$$N = \frac{L_a}{d}$$

$$d \leq \frac{\lambda}{1 + \left|\sin(\frac{\theta}{2})\right|}$$

dans lesquelles N est le nombre de sous-réseaux d'antenne, $L_a$ est une longueur d'antenne, d est la distance entre les sous-réseaux d'antennes, $\lambda$ est une longueur d'onde porteuse et $\theta$ est l'angle de balayage maximal.

**7.** Dispositif selon la revendication 5, dans lequel la seconde unité de calcul (25) est en outre configurée pour : calculer le bruit équivalent à sigma zéro du SAR en mode spotlight glissant selon une formule :

$$NESZ(\theta) = \frac{4 \times (4\pi)^3 \times R_0(\Theta_i)^3 \times L_{az}(\theta) \times L \times v_s \times \sin(\Theta_i) \times k \times Br \times T \times F}{P_{tx} \times G_{tx}(\Theta_i) \times G_{rx}(\Theta_i) \times \lambda^3 \times PRF \times \tau \times N \times c_0}$$

dans laquelle $NESZ(\theta_i)$ est le bruit équivalent à sigma zéro, $P_{tx}$ est un pic de puissance dans l'émission d'antenne, $G_{tx}$ est un gain d'une antenne émettrice ; $G_{rx}$ est un gain d'une antenne réceptrice, $\lambda$ est une longueur d'onde porteuse ; $\Gamma$ est une largeur de l'impulsion transmission ; $\sigma$ est un coefficient de rétrodiffusion ; $C_0$ est la vitesse de la lumière, $R_0$ est une distance oblique, $L_{az}$ est une perte azimut, L est une perte de système ; $B_r$ est une bande passante de transmission, T est une température de système, F est un chiffre de bruit de récepteur, $\Theta_i$ est un angle d'incidence du satellite, $v_s$ est une vitesse du satellite et $\theta$ est l'angle de balayage maximal ;
et calculer le rapport signal sur ambiguïté azimut du SAR en mode spotlight glissant selon une formule :

$$AASR(\theta) = \frac{E\left[\left|2 \times \sum_{k=1}^{\infty} (U_k(f + k \times PRF, \theta))\right|^2\right]}{E\left[|U_k(f, \theta)|^2\right]}$$

dans laquelle $AASR(\theta)$ est le rapport signal sur ambiguïté azimut, U(f) est une amplitude d'un signal reçu et la PRF est la fréquence de répétition d'impulsion.

**8.** Dispositif selon une quelconque des revendications 5 à 7, comprenant en outre une troisième unité de calcul (27) et une unité de mise à jour (28), dans lequel la troisième unité de calcul est configurée pour calculer une migration de cellule distante, RCM, selon une formule :

$$RCM = \frac{R_c}{2} \times (\sin\theta + \sin\theta_{theta})^2$$

dans laquelle RCM est la migration de cellule distante, $R_c$ est une distance minimale entre le satellite et le sol, $\theta$ est l'angle de balayage maximal et $\theta_{theta}$ concorde avec une formule :

$$\theta_{theta} = 0,886 \times \frac{\lambda}{L_a}$$

dans laquelle $\lambda$ est une longueur d'onde porteuse et $L_a$ est une longueur d'antenne ;
et l'unité de mise à jour est configurée pour mettre à jour la fenêtre d'écho en ajoutant la migration de cellule distante dans la fenêtre d'écho ;
dans lequel la seconde condition sert à définir qu'aucune impulsion transmise par le SAR en mode spotlight glissant ne soit comprise dans une fenêtre d'écho mise à jour, et la troisième condition sert à définir qu'aucune interférence d'écho nadir avec le SAR en mode spotlight glissant ne soit comprise dans une fenêtre d'écho mise à jour.

9. Radar à ouverture synthétique, SAR, en mode spotlight glissant, dans lequel :

   un nombre de sous-réseaux d'antenne du SAR en mode spotlight glissant remplit une première condition définissant une distance entre les sous-réseaux d'antenne ; et
   un paramètre clé du SAR multifaisceaux concorde avec un index préréglé, dans lequel le paramètre clé comprend une information sur au moins un d'un rapport signal sur ambiguïté azimut, rapport signal sur ambiguïté de distance et un bruit équivalent à sigma zéro ; et
   **caractérisé en ce que** une fréquence de répétition d'impulsion, PRF, du SAR en mode spotlight glissant remplit une seconde condition et une troisième condition, dans lequel la seconde condition sert à définir qu'aucune impulsions transmise par le SAR en mode spotlight glissant ne soit compris dans une fenêtre d'écho, et la troisième condition sert à définir qu'aucune interférence d'écho nadir avec le SAR en mode spotlight glissant ne soit comprise dans la fenêtre d'écho ; et
   la seconde condition est définie par la formule :

$$\frac{i}{2R_n / c - T_p - T_{pt}} \leq PRF \leq \frac{i+1}{2R_f / c + T_p + T_{pt}} ,$$

   et la seconde condition est définie par la formule :

$$\frac{j}{2R_n / c - T_p - T_{pt} - 2H / c} \leq PRF \leq \frac{j+1}{2R_f / c + T_p + T_{pt} - 2H / c}$$

   dans laquelle $T_p$ est une largeur de l'impulsion transmise, $T_{pt}$ est un temps de protection, $R_n$ et $R_f$ sont une distance oblique d'extrémité proche et une distance oblique d'extrémité distante, respectivement, $c$ est la vitesse de la lumière, $i$ et $j$ sont un entier positif, respectivement, et $H$ est la hauteur effective d'un satellite.

10. SAR en mode spotlight glissant selon la revendication 9, dans lequel la première condition est définie par les formules :

$$N = \frac{L_a}{d}$$

$$d \leq \frac{\lambda}{1 + \left|\sin(\frac{\theta}{2})\right|}$$

dans lesquelles N est le nombre de sous-réseaux d'antenne, $L_a$ est une longueur d'antenne, d est la distance entre les sous-réseaux d'antennes, $\lambda$ est une longueur d'onde porteuse et $\theta$ est l'angle de balayage maximal.

Fig. 1

a maximal scanning angle and an antenna size of a sliding spotlight SAR is
calculated based on system parameters of the sliding spotlight SAR — 101

a number of antenna sub-arrays of the sliding spotlight SAR meeting a first
condition is determined — 102

a PRF meeting a second and a third conditions is determined — 103

information on a beam position of the sliding spotlight SAR is acquired
based on the PRF meeting the second and the third conditions — 104

a key parameter of the sliding spotlight SAR is calculated based on the
beam position of the sliding spotlight SAR — 105

it is determined that the number of antenna sub-arrays of the sliding
spotlight SAR meets the first condition and that the PRF of the sliding
spotlight SAR meets the second condition and the third condition when it is
determined that the key parameter of the sliding spotlight SAR meets a
preset index — 106

Fig. 2

```
┌─────────────────────────────┐
│   First calculating unit 21 │
└──────────────┬──────────────┘
               │
┌──────────────┴──────────────┐
│   First determining unit 22 │
└──────────────┬──────────────┘
               │
┌──────────────┴──────────────┐
│  Second determining unit 23 │
└──────────────┬──────────────┘
               │
┌──────────────┴──────────────┐
│       Acquiring unit 24     │
└──────────────┬──────────────┘
               │
┌──────────────┴──────────────┐
│  Second calculating unit 25 │
└──────────────┬──────────────┘
               │
┌──────────────┴──────────────┐
│   Third determining unit 26 │
└──────────────┬──────────────┘
               ▼
┌ ─ ─ ─ ─ ─ ─ ─ ─ ─ ─ ─ ─ ─ ─ ┐
    Third calculating unit 27
└ ─ ─ ─ ─ ─ ─ ┬ ─ ─ ─ ─ ─ ─ ─ ┘
               ▼
┌ ─ ─ ─ ─ ─ ─ ─ ─ ─ ─ ─ ─ ─ ─ ┐
        Updating unit 28
└ ─ ─ ─ ─ ─ ─ ─ ─ ─ ─ ─ ─ ─ ─ ┘
```

Fig. 3

Fig. 4

Fig. 5

Fig. 6

Fig. 7

# EP 2 762 917 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **QIAN CHEN et al.** Investigation of Multichannel Sliding Spotlight SAR for Ultrahigh-Resolution and Wide-Swath Imaging. *IEEE Geoscience and Remote Sensing Letters,* 01 November 2013, vol. 10 (6), ISSN 1545-598X, 1339-1343

- **CANGUAN GAO.** Large-Scene Sliding Spotlight SAR Using Multiple Channels in Azimuth. *IEEE Geoscience and Remote Sensing Letters,* 01 September 2013, vol. 10 (5), ISSN 1545-598X, 1006-1010
- **YANHUA WANG et al.** Analysis of some key parameters in sliding spotlight SAR. *IET International Radar Conference,* 22 April 2009, ISSN 0537-9989, ISBN 978-1-84-919010-7, 1-4